# FASCICULE DE BREVET EUROPEEN

(11) **EP 3 408 622 B1**
(45) Date de publication et mention de la délivrance du brevet: **20.11.2019**
(21) Numéro de dépôt: 17706284.1
(22) Date de dépôt: 24.01.2017
(51) Int. Cl.: G01F 1/66

(54) **DISPOSITIF DE MONTAGE D'UN TRANSDUCTEUR À ULTRASONS ET DÉBITMÈTRE ÉQUIPÉ D'UN TEL DISPOSITIF**
VORRICHTUNG ZUR MONTAGE EINES ULTRASCHALLWANDLERS UND DURCHFLUSSMESSER MIT EINEM VORRICHTUNG DIESER ART
DEVICE FOR MOUNTING AN ULTRASONIC TRANSDUCER, AND FLOW METER PROVIDED WITH A DEVICE OF THIS KIND

(30) Priorité: 25.01.2016 FR 1650565
(43) Date de publication de la demande: 05.12.2018
(73) Titulaire: Integra Metering SAS, 31700 Blagnac (FR)
(72) Inventeur: RAMOND, Alain, 31000 Toulouse (FR); POQUE, Mathieu, 31290 Villefranche-de-Lauragais (FR)
(74) Mandataire: Cabinet BARRE LAFORGUE & associés
(86) Numéro de dépôt international: PCT/FR2017/050143
(87) Numéro de publication internationale: WO 2017/129888

(56) Documents cités:
- EP-A1- 2 333 495
- GB-A- 2 101 318
- US-A- 4 375 767
- US-A- 5 905 207

## Description

L'invention concerne un dispositif de montage d'un transducteur à ultrasons, et plus particulièrement un tel dispositif adapté pour monter ledit transducteur dans une canalisation d'un débitmètre. L'invention concerne également des débitmètres équipés de tels dispositifs de montage.

Il existe de nombreuses catégories de débitmètres à ultrasons, dans lesquels le débit d'un fluide est mesuré par la vitesse de propagation d'ultrasons dans le milieu fluide circulant dans une canalisation.

La présente invention s'applique aux débitmètres dans lesquels le transducteur ou au moins son dispositif de montage traverse la paroi de la canalisation pour rentrer en contact avec le fluide dont le débit est à mesurer, par opposition aux débitmètres dans lesquels les transducteurs et/ou leur dispositif de montage est installé à l'extérieur de la canalisation et dont la mesure est effectuée par transmission d'ondes au travers des parois de celle-ci.

On connait, par exemple du document US 5,531,124, en particulier figures 9 et 10, un débitmètre à ultrasons dans lequel les transducteurs sont montés en regard l'un de l'autre dans des trous percés en diagonale dans la paroi de la canalisation. Cependant, outre le coût et la difficulté de réaliser un tel perçage en diagonale avec la précision requise, en particulier dans un matériau tel que l'acier inoxydable, le positionnement du transducteur, avec ou sans dispositif de montage, présente de nombreux inconvénients. En effet, si le transducteur est inséré dans le trou sans déborder à l'intérieur de la canalisation, il se forme du fait de l'inclinaison, une cavité devant le transducteur qui est le siège de turbulences et/ou de zones de stagnation du fluide qui perturbent la mesure et peuvent générer un encrassement devant les transducteurs. US 5,531,124 propose également de combler cette cavité au moyen d'un bouchon de résine présentant une perméabilité aux ultrasons analogue à celle du fluide à mesurer. Cependant, un tel bouchon cause une atténuation du signal qu'il est nécessaire de compenser. En outre, la face en contact avec le fluide est inclinée par rapport à l'axe de mesure, ce qui peut entrainer d'autres erreurs de mesure, par exemple dues à des phénomènes de réfraction. De plus, un tel bouchon est délicat à réaliser de manière à ce qu'il ne présente aucun dépassement ou aucun retrait dans le passage de fluide.

Le document EP 2 333 495 propose un débitmètre à ultrasons dans lequel les transducteurs sont montés dans une "pièce de connexion" fixée sur la canalisation du débitmètre. Cette pièce de connexion résout certains problèmes de turbulence autour de la jonction avec la canalisation en proposant une surface présentant une géométrie substantiellement identique à celle de la surface intérieure de la canalisation du débitmètre, à l'exception d'une ouverture menant au transducteur. Le transducteur est monté dans cette ouverture par l'intérieur de la pièce de connexion, avant fixation sur la canalisation. Un tel montage présente, outre le problème déjà cité des zones de turbulence et de stagnation du fluide au voisinage du transducteur, l'inconvénient de laisser le transducteur au contact du fluide circulant dans la canalisation et d'être très difficile à maintenir, particulièrement lorsque la pièce de connexion est soudée à la canalisation.

On connait également du document US 3,817,098 ou du document US 5,905,207 un débitmètre, plus particulièrement adapté à la mesure précise de faibles débits, qui présente deux transducteurs en vis-à-vis selon un axe longitudinal d'une canalisation, chaque transducteur étant placé dans une chambre de tranquillisation à chaque extrémité de la portion de canalisation dans laquelle s'effectue la mesure. Cependant, la réalisation de telles chambres de tranquillisation, ainsi que l'installation des transducteurs en vis-à-vis présente de nombreuses difficultés, par exemple liées à l'usinage des chambres.

L'invention vise donc à fournir un dispositif de montage d'un transducteur à ultrasons qui permet un montage aisé du transducteur tout en minimisant les éventuelles perturbations du flux de fluide.

L'invention vise également un tel dispositif de montage qui permet de maitriser la géométrie de l'environnement du transducteur afin de gérer les régimes d'écoulement du fluide autour de celui-ci.

L'invention vise encore un tel dispositif de montage qui minimise les ajustements angulaires nécessaires pour assurer que les transducteurs sont bien alignés.

L'invention vise de plus un tel dispositif de montage permettant de réaliser des formes internes de la canalisation difficiles à obtenir autrement.

L'invention vise en outre un tel dispositif de montage qui permette de supporter de fortes pressions dans le fluide de mesure.

L'invention vise encore un tel dispositif de montage qui permet un usinage facilité des orifices de montage du dispositif sur la paroi de la canalisation, malgré la présence éventuelle d'obstacles tels que des brides de raccordement de la canalisation.

L'invention vise également un tel dispositif de montage permettant de substantielles économies de matière et d'usinage du débitmètre.

Dans le présent texte, on utilise les termes "intérieur" ou "extérieur" en relation avec la canalisation traversant le débitmètre. Ainsi, la surface intérieure de la canalisation est la surface en contact avec le fluide qui la parcourt. De même, un logement s'ouvrant vers l'extérieur de la canalisation est un logement dont l'ouverture n'est pas en contact avec le fluide qui parcourt la canalisation.

Pour atteindre les buts de l'invention, l'invention concerne un dispositif de montage d'un transducteur à ultrasons adapté pour le montage dudit transducteur au travers d'une paroi d'un débitmètre comportant une canalisation à l'intérieur de laquelle circule un fluide, ledit dispositif comportant un corps adapté pour déboucher sur une surface intérieure de ladite canalisation par un orifice selon une ligne de contour formant une interface entre ladite surface intérieure de la canalisation et une surface du corps en contact avec le fluide circulant dans la canalisation, telle que toute droite, orthogonale à la ligne de contour et tangente à la surface intérieure de la canalisation en un point de la ligne de contour est également tangente à ladite surface du dispositif en ce point, caractérisé en ce que le dispositif présente une surface, dite surface active, en contact avec le fluide circulant dans la canalisation et en ce que cette surface active est formée par ladite surface du corps en contact avec le fluide circulant dans la canalisation.

Grâce à cette disposition, toute la surface du dispositif de montage en contact avec le fluide circulant dans la canalisation est constituée par la surface active du corps. Il n'existe donc pas de trou, coupure ou discontinuité dans cette surface active, susceptible d'engendrer des turbulences dans le flux de fluide. En outre, cette surface pouvant être formée en une seule pièce avec le corps du dispositif, par exemple par moulage, la forme de cette surface peut être entièrement maitrisée. De plus, la surface active étant continue, il ne peut y avoir de problème d'étanchéité du dispositif de montage, à l'exception de l'interface entre ce dispositif et la canalisation. Cependant, cette interface elle-même est parfaitement lisse et ne présente aucune aspérité et/ou aucun décrochement qui pourrait être cause de turbulences. En outre, la surface active est exempte de trou(s) permettant l'insertion du transducteur et entrainant des arêtes vives à l'interface entre le transducteur et la surface active ainsi que des problèmes d'étanchéité.

L'étanchéité d'un débitmètre équipé de tels dispositifs de montage est ainsi améliorée. En outre, la taille de la surface active du dispositif de montage peut être relativement importante ce qui minimise de fait la quantité de matière, en général du laiton ou de l'acier inoxydable utilisée pour les parois de la canalisation.

Avantageusement et selon l'invention, ladite surface active est au moins partiellement formée par une paroi du corps présentant à l'opposé de la surface active une face d'appui portant le transducteur. Le transducteur est ainsi placé à l'opposé de la surface active, à l'abri du fluide circulant dans la canalisation. La paroi du corps intercalée entre le transducteur et le fluide peut avantageusement, en fonction du matériau employé, être dimensionnée en épaisseur de manière à adapter l'impédance acoustique entre le transducteur et le fluide. Il peut alors être envisagé d'utiliser directement une plaquette piézoélectrique nue en lieu et place d'un transducteur enrobé et ainsi réaliser avec le corps un transducteur intégré plus économique.

Avantageusement et selon l'invention, ladite surface active est exempte d'arêtes vives. En formant la surface active avec des surfaces arrondies, des congés de raccordement au lieu d'angles vifs, etc. jusqu'à l'interface entre la surface active et la surface intérieure de la canalisation, le trajet des lignes de flux de fluide est maitrisé et permet un écoulement sans zones de stagnation du fluide.

Avantageusement et selon l'invention, le transducteur est monté dans le corps de manière à présenter une direction d'émission / réception d'ultrasons traversant une face plane, dite face active, de la surface active. Préférentiellement, la face active est parallèle à la face d'appui. Ainsi, la direction d'émission / réception du transducteur est normale tant à la face d'appui qu'à la face active. Dès lors, la direction d'émission / réception du transducteur peut être fixée par construction grâce à l'orientation de la paroi du corps.

Selon un premier mode de réalisation avantageux de l'invention, le dispositif de montage est adapté pour orienter la direction d'émission / réception du transducteur selon une direction, dite direction de mesure, adaptée pour s'étendre dans un plan de symétrie longitudinale de la canalisation et former un angle prédéterminé avec un axe longitudinal de celle-ci. Ce mode de réalisation est particulièrement adapté pour la réalisation de débitmètres comportant deux transducteurs en vis-à-vis selon une diagonale de la canalisation pour une mesure de débit directe. Il peut également être utilisé pour des débitmètres dans lesquels la mesure s'effectue par réflexion des ondes ultrasonores sur une surface intérieure de la canalisation, par exemple selon un trajet en V ou en W.

Avantageusement et selon l'invention, ladite surface active comporte une niche en creux s'étendant selon une direction longitudinale adaptée pour être parallèle à un axe longitudinal de la canalisation lorsque le dispositif de montage est monté sur celle-ci. L'une des parois de la niche est la paroi définie par la face d'appui et la face active de manière à définir l'angle d'orientation prédéterminé de la direction de mesure. Ainsi, l'émission et/ou la réception des ondes ultrasonores est effectuée directement dans la direction de mesure, sans perturbations liées à d'éventuelles erreurs d'angle de perçage influant sur l'angle d'incidence des ondes. La forme et la profondeur de la niche sont adaptées pour ne pas entrainer de turbulences ou de stagnation des lignes de flux de fluide.

En particulier et à cet effet, le profil de la niche est tel que tout plan orthogonal à cette direction longitudinale coupe la surface active en une seule ligne. Il ne peut donc pas y avoir de partie en retrait, c'est-à-dire formant un trajet de fluide présentant un retour en arrière ou un rebroussement du flux qui causerait une zone de stagnation susceptible de permettre des dépôts d'impuretés ou des proliférations bactériennes dans le cas d'un débitmètre pour la mesure d'un débit d'eau potable. Ainsi, un débitmètre faisant usage d'un tel dispositif de montage d'un transducteur est plus sain et ne détériore pas les qualités du fluide qui le traverse.

Avantageusement et selon l'invention, la surface active comporte, au voisinage de ladite face active, des reliefs adaptés pour modifier un écoulement du fluide. Ainsi, la présence de striures longitudinales ou de formes en aileron placées au niveau du raccordement de la face active avec la surface active en amont de la face active, dans le flux de fluide, peut contribuer à régulariser ce flux dans des régimes particulièrement turbulents.

Avantageusement et selon l'invention, le corps du dispositif comporte au droit de la face d'appui un logement ouvert présentant une concavité orientée à l'opposé de l'axe longitudinal de la canalisation. Grâce à ce logement et à la face d'appui qu'il présente, il est facile de placer le transducteur à ultrasons à l'abri du fluide d'une part et dans une position optimale pour l'émission et/ou la réception des ondes ultrasonores. De plus, lorsque le corps du dispositif de montage est réalisé en matière synthétique injectée, l'épaisseur de paroi entre la face d'appui et la face active peut être optimisée pour s'accorder avec la longueur d'onde des ultrasons et minimiser une éventuelle atténuation des ondes.

Avantageusement et selon l'invention, le dispositif de montage comporte en outre un obturateur, adapté pour coopérer avec ledit logement afin de plaquer le transducteur à ultrasons contre la face d'appui. Cet obturateur peut comporter une face plane, parallèle à la face d'appui du logement, adaptée pour exercer une pression sur le transducteur lorsque l'obturateur est fixé dans le logement. De plus, l'obturateur peut comporter une ou plusieurs alvéoles munies de contacts conducteurs adaptés pour être connectés aux bornes du transducteur d'une part et servir de broches de connexion vers un dispositif électronique externe.

Avantageusement et selon l'invention, le dispositif de montage est adapté pour être monté dans la canalisation selon une direction orthogonale à un axe longitudinal de celle-ci. Dès lors que l'orientation du transducteur peut être fixée par le corps du dispositif de montage, il est possible et avantageux d'agencer le dispositif de montage de sorte qu'il puisse être introduit radialement dans la canalisation et fixé sur celle-ci, sans avoir besoin de réaliser un perçage oblique sur la canalisation. De ce fait, les contraintes d'usinage de la canalisation sont réduites et le coût en est réduit. De plus, la précision de la position du transducteur est améliorée.

Avantageusement et selon l'invention, le dispositif de montage comporte en outre une bride adaptée pour fixer le corps sur ladite canalisation, ladite bride comportant en regard du corps une saillie en forme d'étrier adaptée pour coopérer avec une forme conjuguée du corps pour rigidifier ce dernier. La saillie en forme d'étrier de la bride vient se loger dans une forme complémentaire ménagée dans le corps du dispositif de montage et permet de renforcer le corps afin de pouvoir accepter sans déformation des fluides sous forte pression.

L'invention s'étend également à un débitmètre à ultrasons, du type comportant une canalisation de mesure du débit d'un fluide et au moins deux transducteurs à ultrasons montés en regard l'un de l'autre au travers d'une paroi de ladite canalisation, dans un même plan longitudinal de symétrie de la canalisation, lesdits transducteurs étant orientés selon une direction de mesure formant un angle non nul et inférieur à 90° avec l'axe longitudinal de la canalisation, caractérisé en ce que chaque transducteur est installé dans un dispositif de montage présentant l'une quelconque des caractéristiques ci-dessus.

Avantageusement et selon un second mode de réalisation de l'invention, le dispositif de montage est adapté pour être monté sur un débitmètre comportant une canalisation présentant une chambre de tranquillisation à chaque extrémité de celle-ci, chaque chambre comportant un transducteur à ultrasons monté de telle façon que la direction d'émission / réception du transducteur soit confondue avec l'axe longitudinal de ladite canalisation. Le dispositif de montage est agencé de telle sorte que le transducteur associé à chaque dispositif soit en vis-à-vis de l'autre transducteur, dans l'axe de l'écoulement du fluide lorsque le dispositif de montage est installé dans le débitmètre.

Avantageusement et selon l'invention, la surface active du corps du dispositif forme au moins une partie de la paroi de la chambre de tranquillisation. Ainsi, quelle que soit la forme de la chambre de tranquillisation, le corps du dispositif de montage forme un bouchon fermant un orifice de la chambre par lequel le transducteur est introduit, ce bouchon présentant une continuité de forme avec la chambre de tranquillisation, au moins autour de la ligne de contour de l'interface entre le bouchon et la chambre.

Avantageusement et selon l'invention, la surface active du corps du dispositif forme une calotte dont la ligne de contour est au moins partiellement comprise dans un plan de symétrie de la chambre de tranquillisation passant par l'axe de la canalisation. Ainsi, que la chambre de tranquillisation soit sphérique, en forme de tonneau ou en forme de deux cônes reliés par leur grande base par un cylindre de révolution, la forme en creux de la chambre peut être réalisée en deux parties, de forme et de taille sensiblement identique et complémentaire, ce qui permet de simplifier l'usinage et/ou le moulage de telles formes, voire même de les rendre possibles.

Avantageusement et selon l'invention, la surface active forme également une enveloppe creuse au moins sensiblement cylindrique, dite plongeur, s'étendant radialement en saillie en direction de l'axe longitudinal de la canalisation et d'une longueur adaptée pour couper cet axe. Le plongeur permet ainsi d'installer le transducteur à ultrasons à l'intérieur de l'enveloppe, sur l'axe longitudinal de la canalisation, en regard d'un autre transducteur installé dans un dispositif de montage symétrique dans la chambre de tranquillisation opposée.

Avantageusement et selon l'invention, le plongeur comporte, au moins sur une face interne de l'enveloppe creuse, un méplat orthogonal à l'axe longitudinal de la canalisation, adapté pour former une paroi d'appui pour le transducteur à ultrasons. Ainsi, le transducteur peut être monté à l'intérieur du plongeur, selon une orientation prédéterminée et être relié par des connexions électriques à l'extérieur de la chambre de tranquillisation.

L'invention s'étend également à un débitmètre à ultrasons, du type comportant une canalisation de mesure du débit d'un fluide, ladite canalisation présentant une chambre de tranquillisation à chaque extrémité, chaque chambre comportant un transducteur à ultrasons monté en vis-à-vis du transducteur de l'autre chambre selon un axe longitudinal de ladite canalisation caractérisé en ce que chaque transducteur est installé dans un dispositif de montage selon l'une quelconque des caractéristiques du second mode de réalisation de l'invention.

L'invention concerne également un dispositif de montage d'un transducteur à ultrason et un débitmètre à ultrasons caractérisés en combinaison par tout ou partie des caractéristiques mentionnées ci-dessus ou ci-après.

D'autres buts, caractéristiques et avantages de l'invention apparaîtront au vu de la description qui va suivre et des dessins annexés dans lesquels :
- la figure 1 est une vue en coupe longitudinale d'un débitmètre selon un premier mode de réalisation de l'invention,
- la figure 2 est une vue en coupe longitudinale d'un dispositif de montage selon le premier mode de réalisation l'invention,
- la figure 3 est une vue en coupe transversale d'un dispositif de montage et d'un débitmètre selon la ligne AA de la figure 1,
- la figure 4 est une vue en perspective de la face inférieure d'une bride d'un dispositif de montage selon le premier mode de réalisation de l'invention,
- la figure 5 est une vue en coupe d'un débitmètre selon le deuxième mode de réalisation de l'invention, équipé de dispositifs de montage adaptés,
- la figure 6 est une vue en perspective d'un dispositif de montage selon le deuxième mode de réalisation de l'invention.

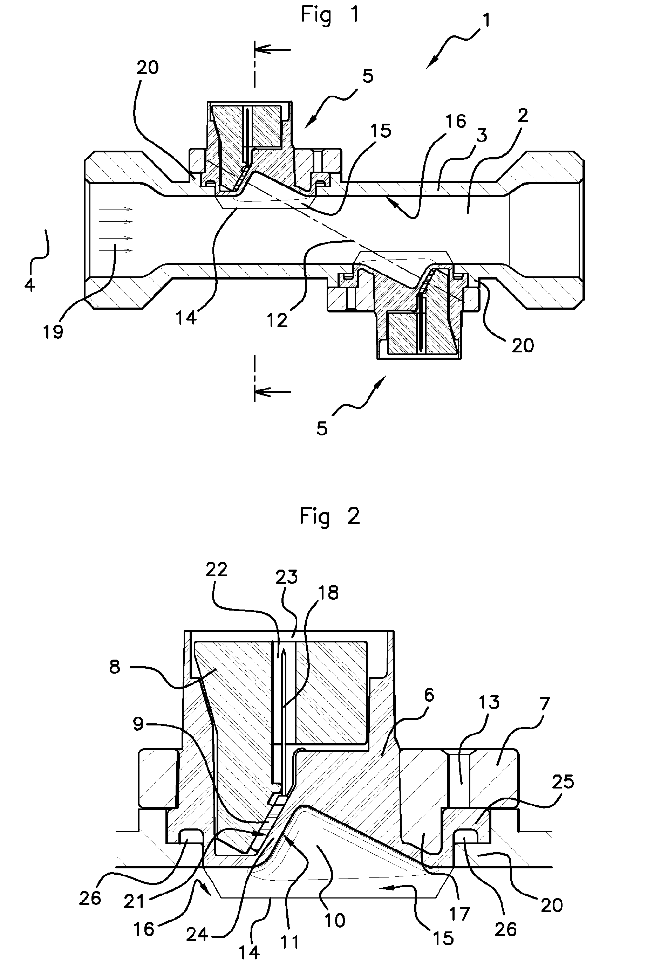

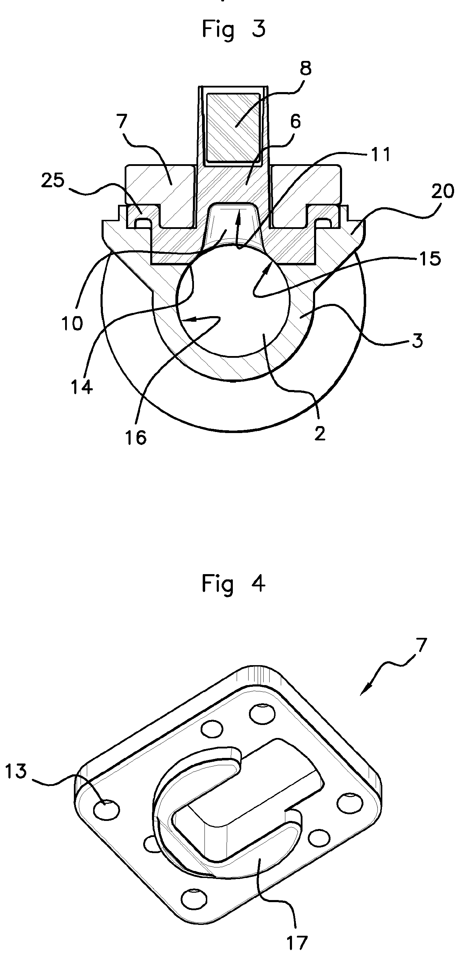

La figure 1 représente, en coupe longitudinale, un débitmètre 1 comprenant un tube 3 formant une canalisation 2 dans laquelle circule un fluide dont le débit est à mesurer. Dans l'exemple représenté, la canalisation 2 est cylindrique de révolution et comporte un axe longitudinal 4. Le tube 3 comporte deux plateaux 20 (figure3) moulés ou usinés sur le tube, diamétralement opposés par rapport à celui-ci et écartés l'un de l'autre selon l'axe longitudinal de la canalisation. Chaque plateau 20 comporte un orifice débouchant dans la canalisation 2. Un dispositif de montage 5 d'un transducteur 9 à ultrasons est installé dans l'orifice de chaque plateau 20 et fixé sur le tube 3.

Le dispositif de montage 5, illustré plus en détail aux figures 2 et 3, comporte un corps 6 formé d'une seule pièce, moulé de préférence en matière synthétique, par exemple en polyétherimide (PEI) pour sa stabilité en température, dont la forme est au moins pour partie conjuguée de celle de l'orifice pour pouvoir être fixé sur celui-ci. Une fois installé dans l'orifice, le corps 6 présente une surface, dite surface active 15, en contact avec le fluide 19 circulant dans la canalisation. La délimitation entre la surface intérieure 16 de la canalisation et la surface active 15 du corps 6 s'effectue selon une ligne fermée, dite ligne de contour 14.

La surface active 15 est la seule partie du dispositif de montage 5 en contact avec le fluide. Elle s'étend continûment, sans ouverture, sur toute la zone délimitée par la ligne de contour 14.

Pour éviter des perturbations du fluide 19 à l'interface entre la surface intérieure 16 de la canalisation et la surface active 15 du corps 6 du dispositif de montage, ces deux surfaces sont dans la continuité l'une de l'autre au moins au voisinage de la ligne de contour 14. Ainsi, la surface active 15 est telle que toute tangente à la surface intérieure 16 de la canalisation, le long de la ligne de contour 14 et orthogonale à celle-ci est également tangente à la surface active 15. De cette manière, l'interface entre les deux surfaces est parfaitement lisse et ne peut générer des décrochements de filets de fluide, des turbulences ou encore des zones de stagnation du fluide. Par exemple, pour une canalisation cylindrique, la surface active du corps du dispositif de montage 5 est également cylindrique et de même rayon, au moins au voisinage de la ligne de contour comme montré sur la figure 3.

Dans un débitmètre 1 tel qu'illustré à la figure 1, deux transducteurs 9 à ultrasons sont installés en vis-à-vis dans la canalisation 2 selon une direction de mesure 12 formant un angle prédéterminé non nul et inférieur à 90° avec l'axe longitudinal 4 dans un plan de symétrie longitudinal de la canalisation. De préférence, l'angle entre la direction de mesure 12 et l'axe longitudinal 4 de la canalisation est de l'ordre de 30° mais peut aller jusqu'à 50° voire plus en fonction des modèles de débitmètre.

Chaque transducteur 9 est formé d'une plaquette de matériau piézoélectrique comportant deux électrodes et protégée par un enrobage externe de matière synthétique de forme parallélépipédique très aplatie. Les faces principales du transducteur sont orthogonales à la direction d'émission / réception des ondes ultrasonores. Chaque transducteur 9 est monté dans un dispositif de montage 5, traversant le tube 3 et débouchant dans la canalisation 2. Les dispositifs de montage 5 sont placés de part et d'autre du tube 3, de manière à ce que les transducteurs 9 soient placés en vis-à-vis et que leur direction d'émission / réception respective coïncide avec la direction de mesure 12.

Du fait de la continuité de la surface active, le transducteur 9 est isolé du fluide circulant dans la canalisation. Il est donc possible d'utiliser directement une plaquette de matériau piézoélectrique, sans enrobage externe à la place du transducteur 9 enrobé. Comme on le décrira par la suite, la plaquette piézoélectrique peut être fixée dans le corps 6 par une couche de colle ou de résine permettant en partie de réaliser une adaptation d'impédance sonore entre la plaquette piézoélectrique et le fluide. Dès lors, le corps 6 et la plaquette du transducteur forment ensemble au moins une partie d'un transducteur intégré.

Pour orienter le transducteur 9 selon la direction de mesure, le corps 6 comporte sur sa surface active 15 une niche 10 en creux dont la concavité est orientée vers l'intérieur de la canalisation 2, c'est-à-dire en direction de l'axe longitudinal 4. Cette niche 10 s'étend selon une direction longitudinale parallèle à l'axe longitudinal 4 de la canalisation et comporte au moins une face plane, dite face active 11, orthogonale à la direction de mesure 12. Les autres parois de la niche 10 peuvent avoir une forme quelconque pour autant que ces parois n'interfèrent pas avec les ondes ultrasonores. Par exemple, la niche 10 comporte, comme illustré en détail sur la figure 2, une face supérieure parallèle à la direction de mesure 12 et deux faces latérales parallèles au plan de symétrie longitudinal de la canalisation contenant la direction de mesure 12.

Afin d'éviter que la niche 10 forme une source de perturbations du flux de fluide ou de zones de stagnation de celui-ci, tout plan orthogonal à la direction longitudinale de la niche (ou orthogonal à l'axe longitudinal 4 de la canalisation) ne coupe la surface active 15 que selon une seule ligne, c'est-à-dire que le profil de la niche, en coupe longitudinale, ne présente aucun rebroussement ou retour en arrière par rapport au sens de circulation du fluide. En pratique, le profil de la niche ne comporte aucun angle aigu qui pourrait constituer une zone de décrochement des filets de fluide ou une zone morte dans laquelle le fluide serait susceptible de stagner.

En outre, la surface active 15 et toutes les faces de la niche 10 qui y est ménagée sont reliées entre elles et à la ligne de contour 14 par des surfaces exemptes d'arêtes vives. Par exemple, toutes les surfaces planes sont reliées entre elles par des congés de rayon suffisant pour ne pas créer de turbulences dans les filets de fluide. Par exemple, pour une niche de 10 à 15 mm de profondeur, les rayons des congés sont de l'ordre de 0,5 à 1 mm.

Cependant, dans certains cas, le flux de fluide peut varier de manière très importante, entrainant des transitions entre divers régimes, par exemple d'un régime laminaire à un régime turbulent en fonction du débit de fluide. Il est alors utile de prévoir certains reliefs à des emplacements prédéterminés de la surface active 15, par exemple au voisinage de la face active 11, afin de gérer les perturbations liées à ces changements de régime. Ainsi, des striures parallèles à la direction de l'écoulement du fluide peuvent être ménagées à la jonction entre la face active 11 et la surface active 15 en amont de la face active par rapport à l'écoulement du fluide, afin de régulariser la direction des filets de fluide. D'autres formes géométriques, par exemple des ailerons, peuvent être employées à divers endroits de la surface active afin de corriger des anomalies dans le flux de fluide sous certains régimes. Ces formes peuvent être avantageusement formées lors du moulage du corps 6.

À l'opposé de la niche 10, le corps 6 comporte un logement 23, ouvert vers l'extérieur, c'est à dire dont la concavité est orientée à l'opposé de l'axe 4. Ce logement comporte une face plane dite face d'appui 21 parallèle à la face active 11 de la niche 10 et délimitant avec elle une cloison 24 sur laquelle le transducteur 9 est fixé. Le logement 23 reçoit un obturateur 8 de forme adaptée pour remplir sensiblement le logement 23, l'obturateur 8 comportant une face venant plaquer le transducteur 9 sur la face d'appui 21. L'obturateur 8 est fixé dans le logement 23 du corps 6 par tout moyen de fixation adapté, par exemple par vissage, encliquetage, soudure, collage ou bouterollage. L'obturateur 8 est réalisé en matière synthétique, de préférence identique ou compatible avec celle du corps 6, et comporte un ou des alvéoles 22 adaptés pour recevoir des moyens de contact électrique avec le transducteur 9, telles que des broches 18 de connecteur qui traversent l'obturateur et viennent en contact avec les broches du transducteur 9. Lorsque le transducteur 9 est simplement une plaquette piézoélectrique nue, cette plaquette est collée sur la face d'appui 21 par de la colle ou une résine appropriée (pour l'adaptation d'impédance sonore) et plaquée contre cette face d'appui par l'obturateur 8 qui forme un connecteur. Dès lors, le corps 6, la plaquette piézoélectrique et l'obturateur forment un bloc solidaire considéré comme un transducteur intégré.

Le corps 6 comporte en outre un rebord 25 adapté pour venir en appui sur le plateau 20 tout autour de l'orifice ménagé dans ce plateau. Le rebord 25 comporte sur sa périphérie une gorge adaptée pour recevoir un joint d'étanchéité 26 entre le rebord 25 et le plateau 20.

Avantageusement, l'orientation du transducteur 9 dans la direction de mesure 12 est assurée par l'inclinaison de la cloison 24 et des faces d'appui 21 et active 11. Dès lors, il est possible de choisir d'insérer le dispositif de montage 5 et donc le corps 6 dans le tube 3 selon une direction quelconque. Préférentiellement, le dispositif de montage 5 est adapté pour être monté sur le tube 3 selon une direction radiale par rapport à celui-ci, c'est-à-dire orthogonalement à l'axe longitudinal 4. Dès lors, le rebord 25 et le plateau 20 peuvent être parallèles et orthogonaux à la direction de montage ce qui simplifie l'usinage de l'orifice de montage dans le tube 3 ainsi que les opérations d'assemblage.

Le dispositif de montage 5 comporte enfin une bride 7 permettant de fixer le corps 6 sur le plateau 20 au moyen de vis (non représentées) passant dans des alésages 13. La bride 7 comporte une lumière centrale permettant le passage de la partie haute du corps 6 afin que l'obturateur 8 et les connexions 18 soient accessibles de l'extérieur une fois le dispositif de montage 5 en position sur le tube 3. La figure 4 représente une vue de dessous en perspective de la bride 7 montrant la présence d'un étrier 17 en saillie sur la face inférieure de la bride 7 et adapté pour coopérer avec un profil conjugué ménagé dans le corps 6 afin de faciliter l'orientation de celui-ci dans l'axe du tube 3 et de renforcer la rigidité du corps 6, particulièrement dans le cas où le fluide circulant dans la canalisation est sous forte pression. La bride 7 peut être réalisée en matériau synthétique, éventuellement chargé avec des fibres de verre ou de carbone pour en améliorer la rigidité ou bien encore en métal, préférentiellement en acier inoxydable. Bien entendu, la bride 7 peut également être solidaire du corps 6, par exemple moulée simultanément en une seule pièce.

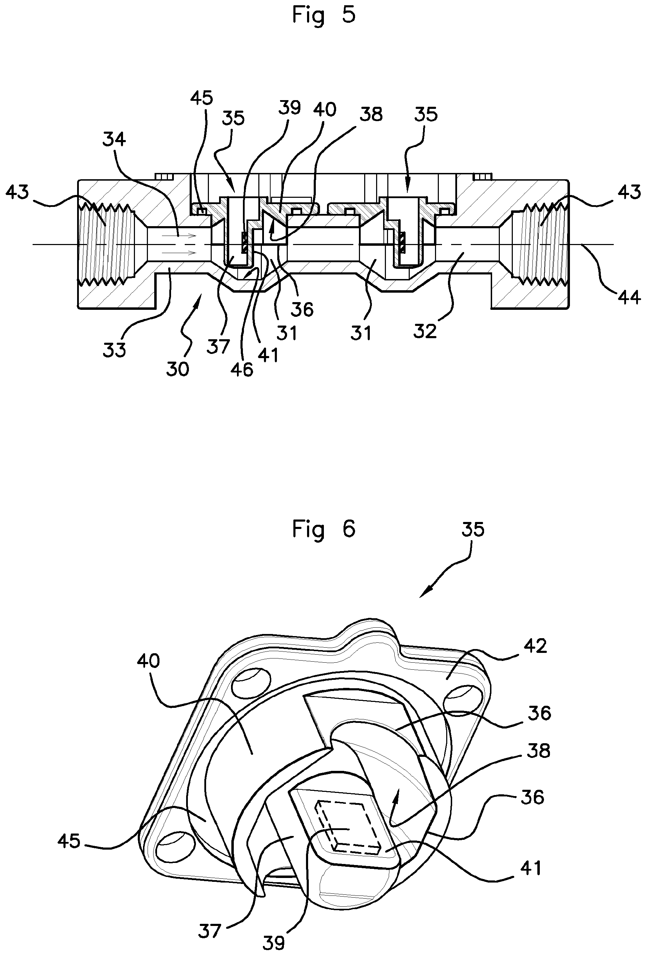

On se réfère maintenant aux figures 5 et 6 qui illustrent un deuxième mode de réalisation d'un débitmètre selon l'invention. Le débitmètre 30 se présente sous la forme générale d'un tube 33 terminé aux deux extrémités par des raccords filetés 43. Entre les raccords 43, la canalisation 32 est parcourue par un fluide 34 et comporte trois tronçons tubulaires séparés par deux chambres 31 de tranquillisation situées de part et d'autre du tronçon tubulaire central. Deux transducteurs 39 à ultrasons sont placés en vis-à-vis l'un de l'autre, de part et d'autre du tronçon tubulaire central, sur un axe longitudinal 44 de la canalisation 32, à l'intérieur des chambres 31.

Dans l'exemple représenté, chaque chambre 31 présente un profil en forme de deux troncs de cône séparés par un tronçon de cylindre, ces trois parties étant coaxiales entre elles et avec l'axe longitudinal 44 des tronçons tubulaires. La petite base de chaque tronc de cône présente un diamètre égal au diamètre de la canalisation et la grande base de chaque tronc de cône présente un diamètre égal à celui du tronçon de cylindre. Une telle forme de canalisation serait très difficile, voire impossible à obtenir sans prévoir une partie démontable. Il en va de même par exemple pour une chambre de forme sphérique ou quasi sphérique.

Afin de faciliter, voire de rendre possible la réalisation d'un débitmètre de ce type, chaque chambre 31 est formée en deux parties, une première partie obtenue à partir du tube 33 et une deuxième partie formée à partir du corps 40 d'un dispositif de montage 35 du transducteur 39. Les deux parties de la chambre 31 se rejoignent selon une ligne de contour 36. Afin de minimiser la génération de turbulences dans le flux du fluide 34 au voisinage de cette ligne de contour, la surface interne de la partie de la chambre 31 issue du tube 33 et la surface, dite surface active 38 de la partie de la chambre issue du dispositif de montage 35, en contact avec le fluide sont telles que le long de la ligne de contour 36, une droite tangente à l'une des surfaces, orthogonale à la ligne de contour est également tangente à l'autre surface. Ainsi, la surface active 38 du dispositif de montage 35 forme une continuité de surface avec le tube 33 pour former la chambre de tranquillisation.

De préférence, dans la chambre 31, la surface active 38 forme une calotte symétrique de la surface intérieure du tube 33 et la ligne de contour 36 appartient au moins en partie au plan de symétrie passant par l'axe longitudinal 44 de la canalisation 32. La chambre 31 de tranquillisation est ainsi formée de deux demi-coques de taille sensiblement identique.

Le dispositif de montage 35 comprend également dans sa surface active, une enveloppe creuse, dite plongeur 37, de forme généralement cylindrique et d'axe orthogonal à l'axe longitudinal 44 de la canalisation. Ce plongeur 37 comporte une ouverture axiale vers l'extérieur de la canalisation 32 adaptée pour permettre l'insertion et la fixation d'un transducteur 39 de telle sorte que la direction d'émission / réception de ce transducteur coïncide avec l'axe longitudinal de la canalisation. À cette fin, le plongeur 37 comporte, au moins sur sa surface interne, un méplat 41 orthogonal à l'axe longitudinal de la canalisation. De préférence, le méplat 41 est formé sur les surfaces interne et externe du plongeur. Le transducteur 39 peut alors être fixé, par exemple par collage, sur la face interne du méplat 41, à l'abri du fluide. L'intérieur du plongeur peut ensuite être obturé par coulage d'une résine. Alternativement, le transducteur 39 peut être fixé sur un obturateur (non représenté) de forme conjuguée à celle de l'intérieur du plongeur, cet obturateur étant ensuite inséré dans le plongeur 37.

Le corps 40 du dispositif de montage 35 présente une surface extérieure sensiblement cylindrique, d'axe orthogonal à l'axe longitudinal 44 de la canalisation et de diamètre adapté pour coopérer avec un orifice de montage ménagé dans le tube 33. Il est ainsi possible d'insérer radialement le dispositif de montage 35 dans le tube 32.

Le corps 40 est en outre surmonté d'une bride 42 adaptée pour fixer le dispositif de montage 35 sur le tube 32. La bride 42 comporte, à la périphérie du corps 40 une gorge 45 adaptée pour recevoir un joint d'étanchéité.

Avantageusement, le dispositif de montage 35 est réalisé d'une seule pièce par moulage en matière synthétique, ce qui permet une fabrication précise et particulièrement économique.

Le débitmètre 30 peut être ainsi constitué d'un tube 33 et de deux dispositifs de montage 35 identiques, équipés chacun d'un transducteur 39 et montés en vis-à-vis de part et d'autre d'un tronçon tubulaire central de la canalisation, chaque dispositif de montage 35 complétant le tube 33 pour former une chambre de tranquillisation 31.

Bien entendu, cette description est donnée à titre d'exemple illustratif uniquement et l'homme du métier pourra y apporter de nombreuses modifications sans sortir de la portée de l'invention, comme par exemple, dans le premier mode de réalisation, remplacer la niche 10 par une saillie dans le flux de fluide ou prévoir de monter le transducteur 9 dans une saillie sur la face active 11, cette saillie restant dans le volume de la niche 10, ou encore, dans le second mode de réalisation, prévoir de mouler les deux dispositifs de montage 35 en une seule pièce.

## Revendications

1. Dispositif de montage (5, 35) d'un transducteur (9, 39) à ultrasons adapté pour le montage dudit transducteur au travers d'une paroi d'un débitmètre (1,30) comportant une canalisation (2, 32) à l'intérieur de laquelle circule un fluide (19, 34), ledit dispositif comportant un corps (6, 40) adapté pour déboucher sur une surface intérieure (16, 46) de ladite canalisation par un orifice selon une ligne de contour (14, 36) formant une interface entre ladite surface intérieure de la canalisation et une surface du corps, cette interface étant telle que toute droite, orthogonale à la ligne de contour et tangente à la surface intérieure de la canalisation en un point de la ligne de contour est également tangente à ladite surface du corps en ce point, **caractérisé en ce que** le dispositif présente une surface, dite surface active, en contact avec le fluide circulant dans la canalisation, **en ce que** cette surface active :
- est formée par ladite surface du corps (6, 40) en contact avec le fluide circulant dans la canalisation,
- s'étend continûment, sans trou, coupure, ouverture ou discontinuité,
et **en ce que** le transducteur est monté dans le corps (6, 40) en étant isolé du fluide circulant dans la canalisation du fait de la continuité de la surface active.

2. Dispositif selon la revendication 1, **caractérisé en ce que** ladite surface active est au moins partiellement formée par une paroi du corps présentant à l'opposé de la surface active une face d'appui portant le transducteur.

3. Dispositif selon l'une quelconque des revendications 1 ou 2, **caractérisé en ce que** ladite surface active (15) est exempte d'arêtes vives.

4. Dispositif selon l'une quelconque des revendications 1 à 3, **caractérisé en ce que** le transducteur est monté dans le corps de manière à présenter une direction d'émission / réception d'ultrasons traversant une face plane, dite face active, de la surface active.

5. Dispositif selon la revendication 4, **caractérisé en ce que** la face active est parallèle à la face d'appui.

6. Dispositif selon l'une quelconque des revendications 4 ou 5, **caractérisé en ce qu'**il est adapté pour orienter la direction d'émission / réception du transducteur (9) selon une direction, dite direction de mesure (12), adaptée pour s'étendre dans un plan de symétrie longitudinale de la canalisation (2) et former un angle prédéterminé avec un axe longitudinal (4) de celle-ci.

7. Dispositif selon l'une quelconque des revendications 1 à 6, **caractérisé en ce que** ladite surface active comporte une niche en creux s'étendant selon une direction longitudinale adaptée pour être parallèle à un axe longitudinal de la canalisation lorsque le dispositif de montage est monté sur celle-ci.

8. Dispositif selon la revendication 7, **caractérisé en ce que** le profil de la niche est tel que tout plan orthogonal à cette direction longitudinale coupe la surface active en une seule ligne.

9. Dispositif selon l'une quelconque des revendications 3 à 8, **caractérisé en ce que** la surface active comporte, au voisinage de ladite face active, des reliefs adaptés pour modifier un écoulement du fluide.

10. Dispositif selon l'une quelconque des revendications 3 à 9 **caractérisé en ce que** le corps (6) du dispositif comporte au droit de la face d'appui, un logement (23) ouvert présentant une concavité orientée à l'opposé de l'axe longitudinal (4) de la canalisation (2).

11. Dispositif selon la revendication 10, **caractérisé en ce qu'**il comporte en outre un obturateur (8), adapté pour coopérer avec ledit logement (23) afin de plaquer le transducteur (9) à ultrasons contre la face d'appui (21).

12. Dispositif selon l'une quelconque des revendications 1 à 11, **caractérisé en ce que** le dispositif (5) est adapté pour être monté dans la canalisation (2) selon une direction orthogonale à un axe longitudinal (4) de celle-ci.

13. Dispositif selon l'une quelconque des revendications 1 à 12, **caractérisé en ce qu'**il comporte en outre une bride (7) adaptée pour fixer le corps (6) sur ladite canalisation (2), ladite bride comportant en regard du corps une saillie en forme d'étrier (17) adaptée pour coopérer avec une forme conjuguée du corps pour rigidifier ce dernier.

14. Dispositif selon l'une quelconque des revendications 1 à 13, **caractérisé en ce qu'**il est adapté pour être monté sur un débitmètre (30) comportant une canalisation (32) présentant une chambre (31) de tranquillisation à chaque extrémité de celle-ci, chaque chambre comportant un transducteur (39) à ultrasons monté de telle façon que la direction d'émission / réception du transducteur soit confondue avec l'axe longitudinal (44) de ladite canalisation.

15. Dispositif selon la revendication 14, **caractérisé en ce que** la surface active (38) du corps (40) du dispositif (35) forme au moins une partie de la paroi de la chambre (31) de tranquillisation.

16. Dispositif selon la revendication 15, **caractérisé en ce que** la surface active (38) du corps (40) du dispositif forme une calotte dont la ligne de contour (36) est au moins partiellement comprise dans un plan de symétrie de la chambre (31) de tranquillisation passant par l'axe (44) de la canalisation (32).

17. Dispositif selon l'une quelconque des revendications 14 à 16, **caractérisé en ce que** la surface active forme également une enveloppe creuse au moins sensiblement cylindrique, dite plongeur (37), s'étendant radialement en saillie en direction de l'axe longitudinal (44) de la canalisation (32) et d'une longueur adaptée pour couper cet axe.

18. Dispositif selon la revendication 17, **caractérisé en ce que** le plongeur (37) comporte, au moins sur une face interne de l'enveloppe creuse, un méplat (41) orthogonal à l'axe longitudinal (44) de la canalisation (32), adapté pour former une paroi d'appui pour le transducteur (39) à ultrasons.

19. Débitmètre (1) à ultrasons, du type comportant une canalisation (2) de mesure du débit d'un fluide (19) et au moins deux transducteurs (9) à ultrasons montés en regard l'un de l'autre au travers d'une paroi de ladite canalisation, dans un même plan longitudinal de symétrie de la canalisation, lesdits transducteurs étant orientés selon une direction de mesure (12) formant un angle non nul et inférieur à 90° avec un axe longitudinal (4) de la canalisation, **caractérisé en ce que** chaque transducteur (9) est installé dans un dispositif de montage (5) selon l'une quelconque des revendications 1 à 13.

20. Débitmètre à ultrasons, du type comportant une canalisation de mesure du débit d'un fluide, ladite canalisation présentant une chambre de tranquillisation à chaque extrémité, chaque chambre comportant un transducteur à ultrasons monté en vis-à-vis du transducteur de l'autre chambre selon un axe longitudinal de ladite canalisation **caractérisé en ce que** chaque transducteur est installé dans un dispositif de montage selon l'une quelconque des revendications 14 à 18.

## Patentansprüche

1. Vorrichtung zum Montieren (5, 35) eines Ultraschallwandlers (9, 39), die für die Montage des Wandlers mittels einer Wand eines Durchflussmessers (1, 30) geeignet ist, der eine Kanalleitung (2, 32) umfasst, in deren Inneren ein Fluid (19, 34) zirkuliert, wobei die Vorrichtung einen Körper (6, 40) umfasst, der dafür geeignet ist, an einer inneren Fläche (16, 46) der Kanalleitung mit einer Mündung gemäß einer Umrisslinie (14, 36) zu münden, die eine Grenzfläche zwischen der inneren Fläche der Kanalleitung und einer Fläche des Körpers bildet, wobei diese Grenzfläche derart ist, dass jede Gerade, die zur Umrisslinie orthogonal und an einem Punkt der Umrisslinie zur inneren Fläche der Kanalleitung tangential ist, an diesem Punkt ebenfalls zur Fläche des Körpers tangential ist, **dadurch gekennzeichnet, dass** die Vorrichtung eine als aktive Fläche bezeichnete Fläche aufweist, die sich mit dem in der Kanalleitung zirkulierenden Fluid in Kontakt befindet, dadurch, dass diese aktive Fläche:
- von der Fläche des Körpers (6, 40) gebildet wird, die sich mit dem in der Kanalleitung zirkulierenden Fluid in Kontakt befindet,
- sich durchgängig, ohne Loch, Unterbrechung, Öffnung oder Ungänze erstreckt,
und dadurch, dass der Wandler im Körper (6, 40) montiert ist unter Isoliertsein, aufgrund der Durchgängigkeit der aktiven Fläche, von dem in der Kanalleitung zirkulierenden Fluid.

2. Vorrichtung nach Anspruch 1, **dadurch gekennzeichnet, dass** die aktive Fläche mindestens teilweise von einer Wand des Körpers gebildet wird, die der aktiven Fläche gegenüberliegend eine Stützseite aufweist, welche den Wandler trägt.

3. Vorrichtung nach einem der Ansprüche 1 oder 2, **dadurch gekennzeichnet, dass** die aktive Fläche (15) frei von scharfen Kanten ist.

4. Vorrichtung nach einem der Ansprüche 1 bis 3, **dadurch gekennzeichnet, dass** der Wandler so im Körper montiert ist, dass er eine Ultraschall-Sende-/Empfangsrichtung aufweist, die durch eine als aktive Seite bezeichnete ebene Seite der aktiven Fläche hindurchgeht.

5. Vorrichtung nach Anspruch 4, **dadurch gekennzeichnet, dass** die aktive Seite zur Stützseite parallel ist.

6. Vorrichtung nach einem der Ansprüche 4 oder 5, **dadurch gekennzeichnet, dass** sie dafür geeignet ist, die Sende-/Empfangsrichtung des Wandlers (9) gemäß einer als Messrichtung (12) bezeichneten Richtung auszurichten, die dafür geeignet ist, sich in einer Längssymmetrieebene der Kanalleitung (2) zu erstrecken und mit einer Längsachse (4) derselben einen vorbestimmten Winkel zu bilden.

7. Vorrichtung nach einem der Ansprüche 1 bis 6, **dadurch gekennzeichnet, dass** die aktive Fläche eine hohle Nische umfasst, die sich gemäß einer Längsrichtung erstreckt, welche dafür geeignet ist, zu einer Längsachse der Kanalleitung parallel zu sein, wenn die Montagevorrichtung an derselben montiert ist.

8. Vorrichtung nach Anspruch 7, **dadurch gekennzeichnet, dass** das Profil der Nische derart ist, dass jede Ebene, die zu dieser Längsrichtung orthogonal ist, die aktive Fläche in einer einzigen Linie schneidet.

9. Vorrichtung nach einem der Ansprüche 3 bis 8, **dadurch gekennzeichnet, dass** die aktive Fläche in der Umgebung der aktiven Seite Erhebungen umfasst, die dafür geeignet sind, eine Strömung des Fluids zu verändern.

10. Vorrichtung nach einem der Ansprüche 3 bis 9, **dadurch gekennzeichnet, dass** der Körper (6) der Vorrichtung an der Stützseite eine offene Aufnahme (23) umfasst, die eine Höhlung aufweist, welche von der Längsachse (4) der Kanalleitung (2) abgewandt ist.

11. Vorrichtung nach Anspruch 10, **dadurch gekennzeichnet, dass** sie weiter einen Verschluss (8) umfasst, der dafür geeignet ist, mit der Aufnahme (23) zusammenzuwirken, um den Ultraschallwandler (9) gegen die Stützseite (21) zu drücken.

12. Vorrichtung nach einem der Ansprüche 1 bis 11, **dadurch gekennzeichnet, dass** die Vorrichtung (5) dafür geeignet ist, in der Kanalleitung (2) gemäß einer Richtung montiert zu werden, die zu einer Längsachse (4) derselben orthogonal ist.

13. Vorrichtung nach einem der Ansprüche 1 bis 12, **dadurch gekennzeichnet, dass** sie weiter einen Bügel (7) umfasst, der dafür geeignet ist, den Körper (6) an der Kanalleitung (2) zu befestigen, wobei der Bügel dem Körper zugewandt einen Vorsprung in Sattelform (17) umfasst, der dafür geeignet ist, mit einer gegenprofilierten Form des Körpers zusammenzuwirken, um diesen letzteren zu versteifen.

14. Vorrichtung nach einem der Ansprüche 1 bis 13, **dadurch gekennzeichnet, dass** sie dafür geeignet ist, an einem Durchflussmesser (30) montiert zu werden, der eine Kanalleitung (32) umfasst, die an jedem Ende derselben eine Beruhigungskammer (31) aufweist, wobei jede Kammer einen Ultraschallwandler (39) umfasst, der derart montiert ist, dass sich die Sende-/Empfangsrichtung des Wandlers mit der Längsachse (44) der Kanalleitung deckt.

15. Vorrichtung nach Anspruch 14, **dadurch gekennzeichnet, dass** die aktive Fläche (38) des Körpers (40) der Vorrichtung (35) mindestens einen Teil der Wand der Beruhigungskammer (31) bildet.

16. Vorrichtung nach Anspruch 15, **dadurch gekennzeichnet, dass** die aktive Fläche (38) des Körpers (40) der Vorrichtung eine Kalotte bildet, deren Umrisslinie (36) mindestens teilweise in einer Symmetrieebene der Beruhigungskammer (31) umfasst ist, welche durch die Achse (44) der Kanalleitung (32) verläuft.

17. Vorrichtung nach einem der Ansprüche 14 bis 16, **dadurch gekennzeichnet, dass** die aktive Fläche ebenfalls einen als Stempel (37) bezeichneten, mindestens im Wesentlichen zylinderförmigen hohlen Mantel bildet, der sich radial in Richtung der Längsachse (44) der Kanalleitung (32) vorspringend erstreckt und von einer Länge ist, die dafür geeignet ist, diese Achse zu schneiden.

18. Vorrichtung nach Anspruch 17, **dadurch gekennzeichnet, dass** der Stempel (37) mindestens an einer innenliegenden Seite des hohlen Mantels eine zur Längsachse (44) der Kanalleitung (32) orthogonale Abflachung (41) umfasst, die dafür geeignet ist, eine Stützwand für den Ultraschallwandler (39) zu bilden.

19. Ultraschalldurchflussmesser (1) von dem Typ, der eine Kanalleitung (2) zum Messen des Durchflusses eines Fluids (19) und mindestens zwei Ultraschallwandler (9) umfasst, die mittels einer Wand der Kanalleitung einander zugewandt in ein und derselben Längssymmetrieebene der Kanalleitung montiert sind, wobei die Wandler gemäß einer Messrichtung (12) ausgerichtet sind, die mit einer Längsachse (4) der Kanalleitung einen Winkel von ungleich Null und kleiner als 90° bildet, **dadurch gekennzeichnet, dass** jeder Wandler (9) in einer Montagevorrichtung (5) nach einem der Ansprüche 1 bis 13 installiert ist.

20. Ultraschalldurchflussmesser von dem Typ, der eine Kanalleitung zum Messen des Durchflusses eines Fluids umfasst, wobei die Kanalleitung an jedem Ende eine Beruhigungskammer aufweist, wobei jede Kammer einen Ultraschallwandler umfasst, der dem Wandler der anderen Kammer gemäß einer Längsachse der Kanalleitung gegenüberliegend montiert ist, **dadurch gekennzeichnet, dass** jeder Wandler in einer Montagevorrichtung nach einem der Ansprüche 14 bis 18 montiert ist.

## Claims

1. Device (5, 35) for mounting an ultrasonic transducer (9, 39) adapted for mounting said transducer through a wall of a flowmeter (1, 30) having piping (2, 32) within which a fluid (19, 34) flows, said device having a body (6, 40) adapted to emerge onto an inner surface (16, 46) of said piping via an aperture along a contour line (14, 36) forming an interface between said inner surface of the piping and a surface of the body, such that any straight line orthogonal to the contour line and tangential to the inner surface of the piping at a point of the contour line is likewise tangential to said surface of the body at this point, **characterised in that** the device has a surface, named active surface, in contact with the fluid flowing in the piping, and **in that** this active surface
- is formed by said surface of the body (6, 40) in contact with the fluid flowing in the piping,
- extends continuously, without a hole, cut, opening or discontinuity,
and **in that** the transducer is mounted in the body (6, 40), isolated from the fluid flowing in the piping owing to the continuity of the active surface.

2. Device according to claim 1, **characterised in that** said active surface is at least partially formed by a wall of the body having a supporting face bearing the transducer opposite the active surface.

3. Device according to any one of claims 1 or 2, **characterised in that** said active surface (15) is free of sharp edges.

4. Device according to any one of claims 1 to 3, **characterised in that** the transducer is mounted in the body so as to have an ultrasound-transmitting/receiving direction passing through a planar face, named active face, of the active surface.

5. Device according to claim 4, **characterised in that** the active face is in parallel with the supporting face.

6. Device according to any one of claims 4 or 5, **characterised in that** it is adapted for orienting the transmitting/receiving direction of the transducer (9) in a direction, named measuring direction (12), adapted for extending in a plane of longitudinal symmetry of the piping (2) and for forming a predetermined angle with a longitudinal axis (4) thereof.

7. Device according to any one of claims 1 to 6, **characterised in that** said active surface has a countersunk recess extending in a longitudinal direction, adapted to be in parallel with a longitudinal axis of the piping when the mounting device is mounted thereon.

8. Device according to claim 7, **characterised in that** the profile of the recess is such that any plane orthogonal to this longitudinal direction cuts the active surface in a single line.

9. Device according to any one of claims 3 to 8, **characterised in that** the active surface has, close to said active face, raised areas adapted to modify a flow of the fluid.

10. Device according to any one of claims 3 to 9, **characterised in that** the body (6) of the device has, at right angles to the supporting face, an open housing (23) having a concavity oriented opposite the longitudinal axis (4) of the piping (2).

11. Device according to claim 10, **characterised in that** it further has a stopper (8) adapted to co-operate with said housing (23) so as to place the ultrasonic transducer (9) against the supporting face (21).

12. Device according to any one of claims 1 to 11, **characterised in that** the device (5) is adapted to be mounted in the piping (2) in a direction orthogonal to a longitudinal axis (4) thereof.

13. Device according to any one of claims 1 to 12, **characterised in that** it further has a flange (7) adapted to fix the body (6) to said piping (2), said flange having, facing the body, a protrusion in the form of a U-clamp (17) adapted to co-operate with a conjugate shape of the body so as to stiffen the body.

14. Device according to any one of claims 1 to 13, **characterised in that** it is adapted to be mounted on a flowmeter (30) comprising piping (32) having a flow-calming chamber (31) at each end thereof, each chamber having an ultrasonic transducer (39) mounted such that the transmitting/receiving direction of the transducer merges with the longitudinal axis (44) of said piping.

15. Device according to claim 14, **characterised in that** the active surface (38) of the body (40) of the device (35) forms at least part of the wall of the flow-calming chamber (31).

16. Device according to claim 15, **characterised in that** the active surface (38) of the body (40) of the device forms a segment, of which the contour line (36) is at least partially contained in a plane of symmetry of the flow-calming chamber (31) passing through the axis (44) of the piping (32).

17. Device according to any one of claims 14 to 16, **characterised in that** the active surface likewise forms a hollow, at least substantially cylindrical, enclosure, named plunger (37), extending radially protruding in the direction of the longitudinal axis (44) of the piping (32) and having a length adapted to cut this axis.

18. Device according to claim 17, **characterised in that** the plunger (37) has, at least on an inner face of the hollow enclosure, a flat (41) orthogonal to the longitudinal axis (44) of the piping (32) adapted to form a supporting wall for the ultrasonic transducer (39).

19. Ultrasonic flowmeter (1) of the type comprising piping (2) for measuring the flow rate of a fluid (19) and at least two ultrasonic transducers (9) mounted facing each other through a wall of said piping in a single longitudinal plane of symmetry of the piping, said transducers being oriented in a measuring direction (12) forming an angle which is not zero and is less than 90° with a longitudinal axis (4) of the piping, **characterised in that** each transducer (9) is installed in a mounting device (5) according to any one of claims 1 to 13.

20. Ultrasonic flowmeter of the type comprising piping for measuring the flow rate of a fluid, said piping having a flow-calming chamber at each end, each chamber having an ultrasonic transducer mounted facing the transducer of the other chamber on a longitudinal axis of said piping, **characterised in that** each transducer is installed in a mounting device according to any one of claims 14 to 18.
